# EUROPEAN PATENT SPECIFICATION

(11) **EP 3 036 748 B1**
(45) Date of publication and mention of the grant of the patent: **13.09.2017**
(21) Application number: 15713459.4
(22) Date of filing: 27.03.2015
(51) Int. Cl.: H01F 3/08, H01F 17/04, H01F 27/02, H01F 27/29, H01F 41/00, H01F 41/02, H01F 41/06

(54) **INDUCTOR AND METHOD OF MANUFACTURING THE SAME**
INDUKTOR UND DESSEN HERSTELLUNGSVERFAHREN
INDUCTEUR ET SON PROCÉDÉ DE FABRICATION

(30) Priority: 01.04.2014 CN 201410129094
(43) Date of publication of application: 29.06.2016
(60) Divisional application: 17177887.1
(73) Proprietor: Würth Elektronik eiSos GmbH & Co. KG, 74638 Waldenburg (DE)
(72) Inventor: WEICHANG, Huang, Heyuan City Guangdong 517000 (CN)
(74) Representative: Rau, Schneck & Hübner Patentanwälte Rechtsanwälte PartGmbB
(86) International application number: PCT/EP2015/056758
(87) International publication number: WO 2015/150274

(56) References cited:
- EP-A2- 2 779 182
- JP-A- H02 103 916
- JP-A- 2003 168 610
- US-A1- 2008 036 566
- US-A1- 2009 278 650
- US-A1- 2010 134 233
- US-A1- 2012 188 040
- US-A1- 2014 002 227

## Description

The present application claims priority of Chinese patent application CN 2014 1012 9094.2.

### Technical Field

The invention relates to an inductor and a method of manufacturing the same, in particular to an inductor capable of improving its manufacturability and performances and a method of manufacturing the same.

### Background Art

With the rapid innovation of electronic technology, demands on electronic components with high efficiency and low loss are higher increasingly. Inductors, wherein the electrodes are formed by extended portions of the coil, are known from the documents US 2010/134233 A1 as well as JP 2003168610 A. The documents US 2014/002227 A1, JP 2103916 A, US 2008/036566 A1 as well as US 2012/188040 A1 describe inductors in which the coil is connected to additional electrodes. US 2009/0278650 A1 discloses an inductor according to the preamble of present claim 1. The die-casting inductors formed integrally appearing on the present market cannot reach above-mentioned effects due to limitations in structural layout design and material combination. Therefore, there is a need for an improved induction component, as an inductor for a specific application field, which can break through above limitations and be provided with the capabilities, characteristics and functions that the current manufacturing equipment and method do not have, and a method for manufacturing the induction component.

### Summary of the Invention

An object in accordance with the invention is to provide an inductor capable of improving its manufacturability and a method for manufacturing the same.

The object in accordance with the invention is achieved by the inductor according to present claim 1 and the method of manufacturing of the inductor according to present claim 7.

Preferred features are specified in the dependent claims.

The inductor has the following advantages compared with the prior art:
Through an integral moulding power casting process, the electrodes of the prefabricated mounted inner core are encased directly in the outer encasing layer, and thereby the firmness of the electrodes can be improved greatly and quality risk can be reduced; and post processing procedures for a conventional product can be derated and the manufacturing cost can be saved.

Through the combination of separated-type core shaft, the core shaft can be combined to be of different materials, thereby providing multiple electrical parameter variations for the inductors of the same specifications so as to meet demands of the client on designs of various electrical performances under the same volume.

**Brief Descriptions of the Drawings**
- Fig. 1: is a structural perspective view illustrating an inductor in accordance with an embodiment of the present invention.
- Fig. 2: is a structural perspective view illustrating a bottom of the inductor in accordance with the embodiment.
- Fig. 3: is a structural perspective view illustrating an inner core of the inductor in accordance with the embodiment.
- Fig. 4: is a structural perspective view illustrating a flat coil of the inductor in accordance with the embodiment.
- Fig. 5: is a structural perspective view illustrating a T-shaped core shaft of the inductor in accordance with the embodiment.
- Fig. 6: is a structural perspective view illustrating a sheet-shaped base of the inductor in accordance with the embodiment.
- Fig. 7: is a structural perspective view illustrating a core rod of the inductor in accordance with the embodiment.
- Fig. 8: is a structural perspective view illustrating an embodiment of the inductor in accordance with the invention.
- Fig. 9: is a structural perspective view of a bottom of the inductor in accordance with the embodiment.
- Fig. 10: is a structural perspective view illustrating an inner core of the inductor in accordance with the embodiment.
- Fig. 11: is a structural perspective view illustrating a flat oval coil of the inductor in accordance with the embodiment.
- Fig. 12: is a structural perspective view illustrating a T-shaped core shaft of the inductor in accordance with the embodiment.
- Fig. 13: is a structural perspective view illustrating a sheet-shaped base of the inductor in accordance with the embodiment.
- Fig. 14: is a structural perspective view of an oval core rod of the inductor in accordance with the embodiment.
- Fig. 15: is a structural perspective view illustrating of the inductor in accordance with an embodiment, which is not part of the present invention.
- Fig. 16: is a structural perspective view illustrating the bottom 1 of the inductor in accordance with the embodiment, which is not part of the present invention.
- Fig. 17: is a structural perspective view illustrating the bottom 2 of the inductor in accordance with the embodiment, which is not part of the present invention.
- Fig. 18: is a structural perspective view illustrating the bottom 3 of the inductor in accordance with the embodiment, which is not part of the present invention.
- Fig. 19: is a structural perspective view illustrating the bottom 4 of the inductor in accordance with the embodiment, which is not part of the present invention.
- Fig. 20: is a structural perspective view illustrating the inner core of the inductor in accordance with the embodiment, which is not part of the present invention.
- Fig. 21: is a structural perspective view illustrating the flat circular coil of the inductor in accordance with the embodiment, which is not part of the present invention.
- Fig. 22: is a structural perspective view illustrating the T-shaped core rod of the inductor in accordance with the embodiment, which is not part of the present invention.
- Fig. 23: is a structural perspective view illustrating a sheet-shaped base of the inductor in accordance with the embodiment, which is not part of the present invention.
- Fig. 24: is a structural perspective view illustrating the core rod of the inductor, which is not part of the present invention.

- Fig. 25: is a structural perspective view illustrating a polygonal shape of the inductor in accordance with an embodiment.
- Fig. 26: is a structural perspective view illustrating a polygonal bottom of the inductor in accordance with an embodiment.
- Fig. 27: is a structural perspective view illustrating a circular shape of inductor in accordance with an embodiment.
- Fig. 28: is a structural perspective view illustrating a circular bottom of the inductor in accordance with the embodiment.

### DETAILED DESCRIPTION

The inductor in accordance with the present invention and the method of manufacturing the same will be described below in more detail in connection with the accompanying drawings.

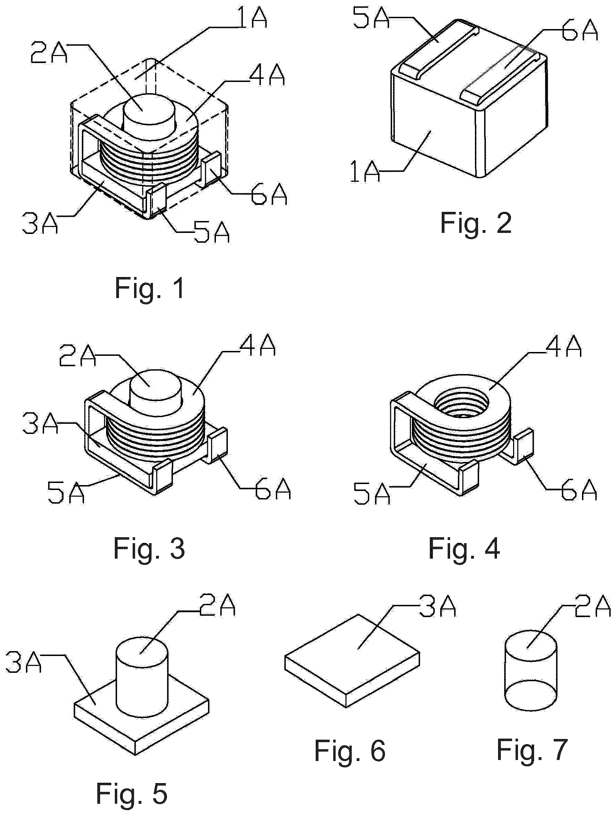

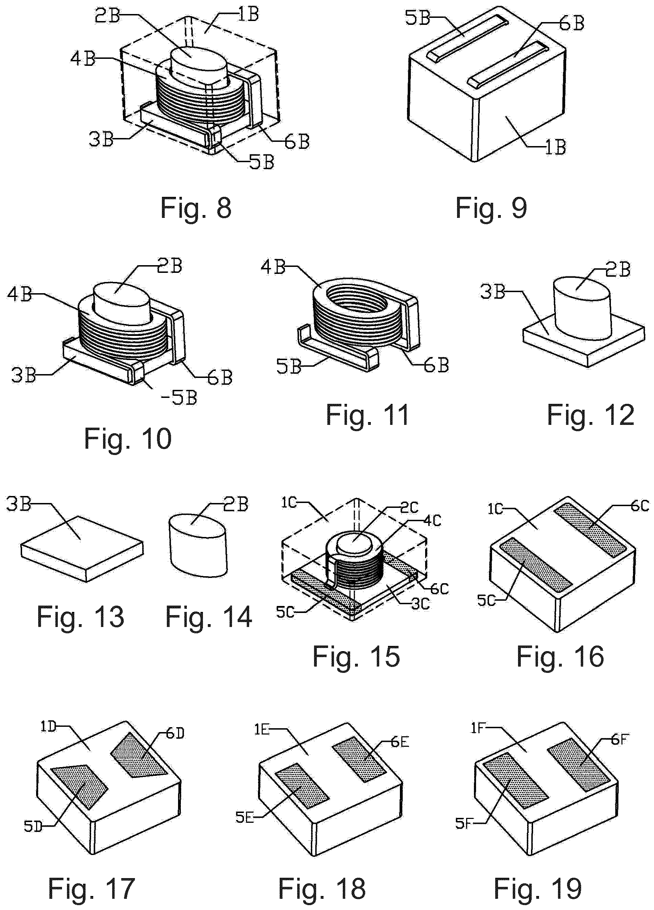

As shown in Figs. 1 to 28, the present invention embodied in Fig.1-14, 25-28 and the example of Fig.15-24 not forming part of the present invention provides an inductor, comprising preparing a mounted inner core (Figs. 3, 10, 20) by using an enameled coil (4A, 4B, 4C) and a core rod (2A, 2B, 2C, 3A, 3B, 3C); putting the mounted inner core (Figs. 3, 10, 20) prepared previously into a corresponding mould so that terminals connecting the coil or portions of the coil which extend to form electrodes (5A, 5B, 6A, 6B) or which are electroplated previously to form electrodes (5C, 5D, 5E, 5F, 6C, 6D, 6E, 6F) are suitable for being exposed out; forming an outer encasing layer (1A, 1B, 1C) through die-casting metal powder by a mechanical or hydraulic powder metallurgy moulding press, wherein the mounted inner core (Figs. 3, 10, 20) and the electrodes (5A, 5B, 5C, 5D, 5E, 5F, 6A, 6B, 6C, 6D, 6E, 6F) are buried into the centre of the outer encasing layer, and the electrodes (5A, 5B, 5C, 5D, 5E, 5F, 6A, 6B, 6C, 6D, 6E, 6F) can be formed by extending and bending the enameled coil or be formed by connecting the enameled coil to the corresponding end faces through the processing such as spot welding, soldering, film plating with silver paste, electroplating and the like, thereby the inductor is manufactured.

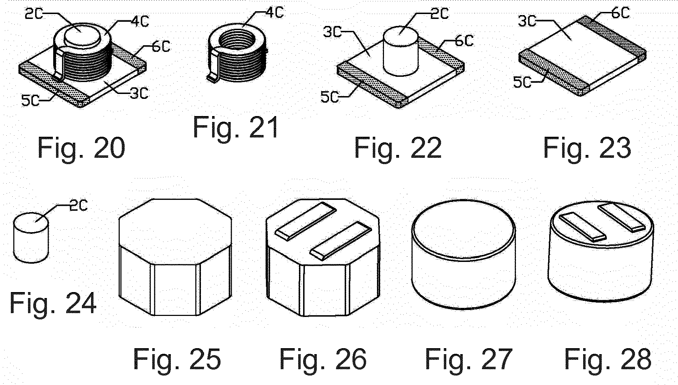

The mounted inner core (Figs. 3, 10, 20) comprises the enameled coil (4A, 4B,4C) and the core shaft (2A, 2B, 2C, 3A, 3B, 3C) disposed in the inner diameter of the enameled coil; the mounted inner core (Figs. 3, 10, 20) may be in the shape of a square (Figs. 1, 8, 15), a circle (Fig. 27) or a polygon (Fig. 25); the electrodes of the mounted inner core (Figs. 3, 10, 20) may be formed by extended portions of the coil or be formed by previously electroplating or film plating with the silver paste on both ends and the bottom of the mounted inner core; and the mounted inner core (Figs. 3, 10, 20) is buried into the centre of the outer encasing layer so that the both ends of the exposed electrodes are encased by a small part of the outer encasing layer.

The enameled coil (4A, 4B, 4C) may be in the shape of a circle or an oval; the enameled coil may comprise a round enameled wire or a flat enameled wire according to wire shape; leading-outs of the enameled coil may be formed, by winding the wire, to be in the same direction or opposite directions, respectively; the leading-outs of the enameled coil may be on the bottom or sides of the inductor; the enameled coil may be formed by winding the wire in a clockwise or counterclockwise direction; the enameled coil may comprise a single layer or multiple layers; and the enameled coil may be formed through winding and stacking the wire by wide faces or narrow faces thereof.

The core shaft (2A, 2B, 2C, 3A, 3B, 3C) may be of a 'T' shape or a 'rod' shape; the core shaft in 'T' shape may be formed integrally, of the same material, into the 'T' shape, or may be formed into the 'T' shape by combining a rod with a sheet-shaped base which each other are made of different materials and are separated; and the core shaft is made of a material such as manganese zinc, nickel zinc, iron powder core or alloy powder, or is made of a combination of various materials such as manganese zinc, nickel zinc, iron powder core and alloy powder.

The outer encasing layer (1A, 1B, 1C) is formed of metal powder particles through die-casting process; the metal powder particles are formed by selecting, according to requirements for properties, corresponding alloy powder, reduced iron powder, carbonyl iron powder or ferrite material and corresponding adhesive resin containing a curing agent to be stirred fully and mixed; or the metal power particles are formed by selecting, according to requirements for properties, a combination of various metal powders such as alloy powder, reduced iron powder, carbonyl iron powder or ferrite material and corresponding adhesive resin containing a curing agent to be stirred fully and mixed; and the adhesive resin comprises epoxy resin, phenolic resin, phenolic epoxy resin, o-cresol formaldehyde epoxy resin or a mixture of multiple resins and corresponding curing agent as well as other organic solvents.

One way for forming the electrodes (5A, 5B, 5C, 5D, 5E, 5F, 6A, 6B, 6C, 6D, 6E, 6F) is that the electrodes may be formed by terminals of the enameled coil connected thereto or may be formed directly by extending and bending the enameled coil, or be formed by flattening or thinning the enameled coil, then performing soldering or electroplating based on the flattening or thinning of the enameled coil and directly extending the enameled coil; or be formed by connecting the enameled coil to corresponding end faces through a process such as spot welding, soldering, film plating with silver paste and electroplating.

Both ends of the electrodes (5A, 5B, 5C, 5D, 5E, 5F, 6A, 6B, 6C, 6D, 6E, 6F) are buried in the outer encasing layer deeply, and exposed middle sections of the electrodes are cleaned to become smooth end faces by grinding with a grinding wheel or stripping paint with laser and are soldered or electroplated to form final electrodes of the inductor.

Another way for forming the electrodes (5A, 5B, 5C, 5D, 5E, 5F, 6A, 6B, 6C, 6D, 6E, 6F) is to form the electrodes previously by performing electroplating or film plating with silver paste on both ends and the bottom of the mounted inner core; and the electrodes are connected electrically to the internal coil through soldering and spot welding.

The electrodes (5A, 5B, 5C, 5D, 5E, 5F, 6A, 6B, 6C, 6D, 6E, 6F) have bottoms which can be made into various shapes, depending on requirements, such as symmetrical or asymmetrical strips, squares, and trapezoids.

The inductor can have an appearance of a square, a circle or a polygon; the inductor can be spray-painted or be not spray-painted; and the height of the inductor can be adjusted correspondingly according to the design requirements and the performance parameters.

A method for manufacturing an inductor, characterized in that the method comprises the steps of:
(1) Selecting a type of enameled wire and winding the enameled wire in a clockwise or counterclockwise direction into a single-layer or multiple-layer-stacked coil upon design requirements, wherein the coil has leading-outs preferably in the same direction;
(2) Putting a 'rod- shaped'/'T- shaped' core shaft into inner diameter of the coil so that a bottom of a sheet-type core shaft is inserted, with two sides of the bottom, into the two leading-outs of the coil to form a prefabricated mounted inner core; or selecting an enameled coil to be put to the bottom of an electroplated sheet-type core shaft and connecting, respectively, leading-outs of the coil to the corresponding end faces by spot welding or soldering to form a prefabricated mounted inner core; or selecting a 'rod-shaped' or 'T-shaped' core shaft and winding directly the wire around the core shaft so that the core shaft is enwrapped by the coil to form a prefabricated mounted inner core; or winding directly the wire around a 'T-shaped' core shaft so that the core shaft is enwrapped by the coil, wherein electrodes are formed by mosaicing terminals or electroplated coatings on both ends of the 'T-shaped' core shaft, and a prefabricated mounted inner core is formed by connecting both ends of the coil to the electrodes through directly spot welding process;
(3) Putting the prefabricated mounted inner core into a corresponding mould so that the coil connecting the terminals or portions of the coil which extend to form the electrodes or which are electroplated previously to form the electrodes are suitable for being exposed out of an encasing layer;
(4) Filling the mould with mixed metal powder particles and forming the outer encasing layer of the inductor through die-casting with cold pressing or a combination of cold pressing and hot pressing by a mechanical or hydraulic powder metallurgy moulding press;
(5) Both ends of the electrodes formed by the terminals connecting the coil or the extended portions of the coil are buried in the outer encasing layer deeply, and exposed middle sections of the electrodes are cleaned to become smooth end faces by grinding with a grinding wheel or stripping paint with laser, and are soldered or electroplated to form final electrodes of the inductor; and the inductor is formed.
(6) Another way for forming the electrodes is to form the electrodes previously by performing electroplating or film plating with silver paste on both ends and the bottom of the mounted inner core, wherein the electrodes are connected electrically to the internal coil through soldering and spot welding; and the inductor is formed.

The enameled coil in the step (1) is in the shape of a circle or an oval; the enameled coil can comprise a round enameled wire or a flat enameled wire according to wire shape; leading-outs of the enameled coil are formed, by winding the wire, to be in the same direction or opposite directions, respectively; the leading-outs of the enameled coil are on the bottom or sides of the inductor; the enameled coil is formed by winding the wire in a clockwise or counterclockwise direction; the enameled coil comprises a single layer or multiple layers; and the enameled coil is formed through winding and stacking the wire by wide or narrow faces thereof.

The mounted inner core in the step (2) comprises the enameled coil and the core shaft disposed in the inner diameter of the enameled coil; the mounted inner core may be in the shape of a square, a circle or a polygon; the electrodes of the mounted inner core may be formed by extended portions of the coil or are formed by previously electroplating or film plating with the silver paste on both ends and the bottom of the mounted inner core; the mounted inner core is buried into the centre of the outer encasing layer so that both ends of the exposed electrodes are encased by a small part of the outer encasing layer.

The core shaft in the step (2) is of a 'T' shape or a 'rod' shape; the core shaft in 'T' shape is formed integrally, of the same material, into the 'T' shape, or is formed the 'T' shape by combining a 'rod' with a sheet-shaped base which each other are made of different materials and are separated; and the core shaft is made of a material of manganese zinc, nickel zinc, iron powder core or alloy powder, or is made of a combination of various materials such as manganese zinc, nickel zinc, iron powder core and alloy powder.

The outer encasing layer in the step (4) is formed of metal powder particles through die-casting process; the metal powder particles are formed by selecting, according to requirements for properties, corresponding alloy powder, reduced iron powder, carbonyl iron powder or ferrite material and corresponding adhesive resin containing a curing agent to be stirred fully and mixed; or the metal power particles are formed by selecting, according to requirements for properties, a combination of various metal powders such as alloy powder, reduced iron powder, carbonyl iron powder, or ferrite material and corresponding adhesive resin containing a curing agent to be stirred fully and mixed; and the adhesive resin comprises epoxy resin, phenolic resin, phenolic epoxy resin, o-cresol formaldehyde epoxy resin or a mixture of multiple resins and corresponding curing agent as well as other organic solvents.

The one way for forming the electrodes in the step (5) is that the electrodes are formed by terminals of the enameled coil connected to the coil or are formed by directly extending and bending the enameled coil, or are formed by flattening or thinning the enameled coil, then performing soldering or electroplating based on the flattening or thinning of the enameled coil and directly extending the enameled coil; or are formed by connecting the enameled coil to corresponding end faces through a process such as spot welding, soldering, film plating with silver paste and electroplating.

The both ends of the electrodes in the step (5) are buried in the outer encasing layer deeply, and the exposed middle sections of the electrodes are cleaned to become smooth end faces by grinding with a grinding wheel or stripping paint with laser and are soldered or electroplated to form final electrodes of the inductor.

The another way for forming the electrodes in step (6) is to form the electrodes previously by performing electroplating or film plating with silver paste on both ends and the bottom of the mounted inner core; the electrodes are connected electrically to the internal coil through soldering and spot welding; and the inductor is formed.

The electrodes in the step (6) have bottom which can be made into various shapes such as symmetrical or asymmetrical strips, squares, trapezoids depending on requirements.

The inductor has the following advantages compared with the prior art:
Through an integral moulding power casting process, the electrodes of the prefabricated mounted inner core are encased directly in the outer encasing layer, and thereby the firmness of the electrodes can be improved greatly and quality risk can be reduced; and post processing procedures for a conventional product can be derated and the manufacturing cost can be saved.

Through the combination of separated-type core shaft, the core shaft can be combined to be of different materials, thereby providing multiple electrical parameter variations for the inductors of the same specifications so as to meet demands of the client on designs of various electrical performances under the same volume.

## Claims

1. An inductor, comprising
- a mounted inner core,
-- wherein the mounted inner core comprises a coil (4A) and a T-shaped core shaft (2A, 3A),
-- wherein the T-shaped core shaft (2A, 3A) is disposed in an inner diameter of the coil (4A),
- electrodes (5A, 6A),
-- wherein the electrodes (5A, 6A) are formed directly by extending and bending the coil (4A), thereby forming extended portions of the coil (4A),
-- wherein each electrode (5A, 6A) comprises an end, and
- an outer encasing layer (1A), wherein the mounted inner core and the electrodes (5A, 6A) are buried into the centre of the outer encasing layer (1A), wherein
- a sheet-shaped base (3A) of the T-shaped core shaft (2A, 3A) is inserted, with two sides of the base (3A), into two leading-outs of the coil (4A) to form the mounted inner core, said two leading-outs being formed by said electrodes,
**characterised in that**
- the coil (4A) is enameled, and
- both ends of the electrodes (5A, 6A) are encased by the outer encasing layer (1A).

2. The inductor as claimed in claim 1, **characterized in that** the mounted inner core is in the shape of a square, a circle or a polygon.

3. The inductor as claimed in claim 1 or 2, **characterized in that** the enameled coil (4A) is in the shape of a circle or an oval; the enameled coil (4A) comprises a flat enameled wire according to wire shape; leading-outs of the enameled coil (4A) are formed, by winding the wire; the enameled coil (4A) comprises a single layer or multiple layers; and the enameled coil (4A) is formed through winding and stacking the wire by wide faces thereof.

4. The inductor as claimed in at least one of claims 1 to 3, **characterized in that** the T-shaped core shaft (2A, 3A) is formed integrally, of the same material, into the T shape, or is formed into the T shape by combining a rod (2A) with the sheet-shaped base (3A) which each other are made of different materials and are separated; and the T-shaped core shaft (2A, 3A) is made of a material of manganese zinc, nickel zinc, iron powder core or alloy powder.

5. The inductor as claimed in at least one of claims 1 to 4, **characterized in that** the outer encasing layer (1A) is formed of metal powder particles through die-casting process; the metal powder particles are formed by selecting, according to requirements for properties, stirring fully and mixing corresponding alloy powder, reduced iron powder, carbonyl iron powder or ferrite material and corresponding adhesive resin containing a curing agent, or are formed by selecting, according to requirements for properties, stirring fully and mixing a combination of multiple metal powders of alloy powder, reduced iron powder, carbonyl iron powder or ferrite material and corresponding adhesive resin containing a curing agent; and the adhesive resin comprises epoxy resin, phenolic resin, phenolic epoxy resin, o-cresol formaldehyde epoxy resin or a mixture of multiple resins and corresponding curing agent as well as other organic solvents.

6. The inductor as claimed in at least one of claims 1 to 5, **characterized in that** exposed middle sections of the electrodes (5A, 6A) are cleaned to become smooth end faces by grinding with a grinding wheel and are soldered or electroplated to form final electrodes of the inductor.

7. A method of manufacturing an inductor, wherein the method comprises the steps of:
(1) Winding an enameled wire to form a single-layer or multiple-layer-stacked coil (4A), wherein the coil (4A) has leading-outs;
(2) Putting a T-shaped core shaft (2A, 3A) into an inner diameter of the coil (4A) so that a sheet-shaped base (3A) of the T-shaped core shaft (2A, 3A) is inserted, with two sides of the base (3A), into the two leading-outs of the coil (4A) to form a prefabricated mounted inner core;
(3) Putting the prefabricated mounted inner core into a corresponding mould so that portions of the coil (4A) which extend to form electrodes (5A, 6A), which form said leading-outs, are suitable for being exposed out of an encasing layer (1A);
(4) Filling the mould with mixed metal powder particles and forming an outer encasing layer (1A) of the inductor through die-casting with cold pressing or a combination of cold pressing and hot pressing by a mechanical or hydraulic powder metallurgy moulding press;
(5) Both ends of the electrodes (5A, 6A) formed directly by extending and bending the coil (4A), thereby forming extended portions of the coil (4A), are buried in the outer encasing layer (1A) deeply such that both ends of the electrodes (5A, 6A) are encased by the outer encasing layer (1A), and exposed middle sections of the electrodes (5A, 6A) are cleaned to become smooth end faces by grinding with a grinding wheel and are soldered or electroplated to form final electrodes of the inductor; and the inductor is formed.

## Patentansprüche

1. Ein Induktor, umfassend
- einen zusammengebauten inneren Kern,
-- wobei der zusammengebaute innere Kern eine Spule (4A) sowie einen T-förmigen Kernschaft (2A, 3A) umfasst,
-- wobei der T-förmige Kernschaft (2A, 3A) in einem Innendurchmesser der Spule (4A) angeordnet ist,
- Elektroden (5A, 6A),
-- wobei die Elektroden (5A, 6A) direkt durch Ausstrecken und Biegen der Spule (4A) gebildet werden, wodurch ausgestreckte Abschnitte der Spule (4A) gebildet werden,
-- wobei jede Elektrode (5A, 6A) ein Ende umfasst, und
- eine äußere Ummantelungsschicht (1A), wobei der zusammengebaute innere Kern und die Elektroden (5A, 6A) in das Zentrum der äußeren Ummantelungsschicht (1A) eingelassen sind,
wobei
- eine plattenförmige Basis (3A) des T-förmigen Kernschafts (2A, 3A) mit zwei Seiten der Basis (3A) in zwei Anschlüsse der Spule (4A) eingesetzt ist, um den zusammengebauten inneren Kern zu bilden, wobei die beiden Anschlüsse durch die Elektroden gebildet sind,
**dadurch gekennzeichnet, dass**
- die Spule (4A) lackisoliert ist, und
- beide Enden der Elektroden (5A, 6A) von der äußeren Ummantelungsschicht (1A) ummantelt sind.

2. Der Induktor gemäß Anspruch 1, **dadurch gekennzeichnet, dass** der zusammengebaute innere Kern die Form eines Quadrats, eines Kreises oder eines Polygons hat.

3. Der Induktor gemäß Anspruch 1 oder 2, **dadurch gekennzeichnet, dass** die lackisolierte Spule (4A) die Form eines Kreises oder einer Ellipse hat, die lackisolierte Spule (4A) einen flachen Lackdraht in Drahtform umfasst, Anschlüsse der lackisolierten Spule (4A) durch Winden des Drahtes gebildet sind, die lackisolierte Spule (4A) eine einzelne Schicht oder eine Vielzahl von Schichten umfasst, und die lackisolierte Spule (4A) durch Winden und Stapeln des Drahtes an dessen Breitseiten gebildet wird.

4. Der Induktor gemäß zumindest einem der Ansprüche 1 bis 3, **dadurch gekennzeichnet, dass** der T-förmige Kernschaft (2A, 3A) einstückig aus demselben Material in die T-Form geformt ist oder durch Kombinieren eines Stabes (2A) mit der plattenförmigen Basis (3A) in die T-Form geformt ist, wobei diese jeweils aus unterschiedlichen Materialien hergestellt und getrennt voneinander sind, und der T-förmige Kernschaft (2A, 3A) aus einem Material ausgewählt aus Manganzink, Nickelzink, Eisenpulverkern oder Legierungspulver hergestellt ist.

5. Der Induktor gemäß zumindest einem der Ansprüche 1 bis 4, **dadurch gekennzeichnet, dass** die äußere Ummantelungsschicht (1A) aus Metallpulverpartikeln in einem Druckgussverfahren gebildet ist, die Metallpulverpartikel durch Auswählen gemäß der gewünschten Eigenschaften, vollständiges Verrühren und Mischen eines entsprechenden Legierungspulvers, reduzierten Eisenpulvers, Karbonyleisenpulvers oder Ferrit-Materials mit einem entsprechenden Klebeharz enthaltend ein Härtungsmittel gebildet sind oder durch Auswählen gemäß der gewünschten Eigenschaften, vollständiges Verrühren und Mischen einer Kombination aus einer Vielzahl von Metallpulvern ausgewählt aus Legierungspulver, reduziertem Eisenpulver, Karbonyleisenpulver oder Ferrit-Material mit einem entsprechenden Klebeharz enthaltend ein Härtungsmittel gebildet sind, und das Klebeharz Epoxidharz, Phenolharz, Phenol-Epoxidharz, O-Kresol-Formaldehyd-Epoxidharz oder eine Mischung aus einer Vielzahl von Harzen und entsprechendem Härtungsmittel sowie weitere organische Lösungsmittel umfasst.

6. Der Induktor gemäß zumindest einem der Ansprüche 1 bis 5, **dadurch gekennzeichnet, dass** freiliegende Mittelabschnitte der Elektroden (5A, 6A) durch Schleifen mit einer Schleifscheibe zu glatten Endflächen gesäubert und durch Löten oder Galvanisieren zu fertigen Elektroden des Induktors weiterverarbeitet sind.

7. Ein Verfahren zur Herstellung eines Induktors, wobei das Verfahren die folgenden Schritte umfasst:
(1) Winden eines lackisolierten Drahtes zu einer einschichtig oder mehrschichtig gestapelten Spule (4A), wobei die Spule (4A) Anschlüsse aufweist,
(2) Einsetzen eines T-förmigen Kerns (2A, 3A) in einen Innendurchmesser der Spule (4A), so dass zur Bildung eines vorgefertigten zusammengebauten inneren Kerns eine plattenförmige Basis (3A) des T-förmigen Kerns (2A, 3A) mit zwei Seiten der Basis (3A) in die beiden Anschlüsse der Spule (4A) eingeführt wird,
(3) Einsetzen des vorgefertigten zusammengebauten inneren Kerns in eine entsprechende Form, so dass abstehende, Elektroden (5A, 6A) bildende Abschnitte der Spule (4A), die die Anschlüsse bilden, dazu geeignet sind, aus einer Ummantelungsschicht (1A) herausgeführt zu werden,
(4) Befüllen der Form mit einer Mischung aus Metallpulverpartikeln und Bilden einer äußeren Ummantelungsschicht (1A) des Induktors in einem Druckguss-Verfahren durch Kaltpressen oder einer Kombination aus Kaltpressen und Warmpressen in einer mechanischen oder hydraulischen pulvermetallurgischen Formpresse,
(5) Beide Enden der direkt durch Ausstrecken und Biegen der Spule (4A) gebildeten Elektroden (5A, 6A), wodurch ausgestreckte Abschnitte der Spule (4A) gebildet werden, werden tief in der äußeren Ummantelungsschicht (1A) eingelassen, so dass beide Enden der Elektroden (5A, 6A) von der äußeren Ummantelungsschicht (1A) ummantelt sind und freiliegende Mittelabschnitte der Elektroden (5A, 6A) durch Schleifen mit einer Schleifscheibe zu glatten Endflächen gesäubert und durch Löten oder Galvanisieren zu fertigen Elektroden des Induktors weiterverarbeitet werden, und der Induktor gebildet wird.

## Revendications

1. Bobine d'induction comprenant :
- une partie centrale interne montée,
-- dans laquelle la partie centrale interne montée comprend une bobine (4A) et un axe formant noyau en T (2A, 3A),
-- dans laquelle l'axe formant noyau en T (2A, 3A) est disposé dans un diamètre intérieur de la bobine (4A),
- des électrodes (5A, 6A),
-- dans laquelle les électrodes (5A, 6A) sont formées directement par extension et pliage de la bobine (4A), de manière à former des parties étendues de la bobine (4A),
-- dans laquelle chaque électrode (5A, 6A) comprend une extrémité, et
- une couche d'enrobage externe (1A), dans laquelle la partie centrale interne montée et les électrodes (5A, 6A) sont noyées au centre de la couche d'enrobage externe (1A),
dans laquelle
- une base en forme de feuille (3A) de l'axe formant noyau en T (2A, 3A) est insérée, par deux côtés de la base (3A), dans deux sorties de la bobine (4A) pour former la partie centrale interne montée, lesdites deux sorties étant formées par lesdites électrodes,
**caractérisée en ce que**
- la bobine (4A) est émaillée, et
- les deux extrémités des électrodes (5A, 6A) sont enrobées par la couche d'enrobage externe (1A).

2. Bobine d'induction selon la revendication 1, **caractérisée en ce que** la partie centrale interne montée a la forme d'un carré, d'un cercle ou d'un polygone.

3. Bobine d'induction selon la revendication 1 ou 2, **caractérisée en ce que** la bobine émaillée (4A) a la forme d'un cercle ou d'un ovale ; la bobine émaillée (4A) comprend un fil plat émaillé selon une forme de fil ; des sorties de la bobine émaillée (4A) sont formées par enroulement du fil ; la bobine émaillée (4A) comprend une seule couche ou de multiples couches ; et la bobine émaillée (4A) est formée par enroulement et empilage du fil sur les faces larges de celui-ci.

4. Bobine d'induction selon l'une au moins des revendications 1 à 3, **caractérisée en ce que** l'axe formant noyau en T (2A, 3A) est formé d'une seule pièce, dans le même matériau, selon la forme en T, ou est formé selon la forme en T par combinaison d'une tige (2A) avec la base en forme de feuille (3A), lesquelles sont constituées respectivement de matériaux différents et sont séparées ; et l'axe formant noyau en T (2A, 3A) est constitué d'un matériau parmi le manganèse-zinc, le nickel-zinc, un noyau en poudre de fer ou une poudre d'alliage.

5. Bobine d'induction selon l'une au moins des revendications 1 à 4, **caractérisée en ce que** la couche d'enrobage externe (1A) est composée de particules de poudre métallique au moyen d'un processus de moulage sous pression ; les particules de poudre métallique sont formées par sélection, en fonction d'exigences en matière de propriétés, par agitation et mélange soigneux d'une poudre d'alliage correspondante, de poudre de fer réduit, de poudre de fer carbonyle ou de matériau de ferrite et d'une résine adhésive correspondante contenant un agent de traitement, ou sont formées par sélection, en fonction d'exigences en matière de propriétés, par agitation et mélange soigneux d'une combinaison de multiples poudres métalliques d'alliage de poudre, de poudre de fer réduit, de poudre de fer carbonyle ou de matériau de ferrite et d'une résine adhésive correspondante contenant un agent de traitement ; et la résine adhésive comprend une résine époxydique, une résine phénolique, une résine époxy-phénolique, une résine époxy-o-crésol-formaldéhyde ou un mélange de multiples résines et d'un agent de traitement correspondant, ainsi que d'autres solvants organiques.

6. Bobine d'induction selon l'une au moins des revendications 1 à 5, **caractérisée en ce que** les sections médianes visibles des électrodes (5A, 6A) sont nettoyées pour devenir des faces d'extrémité lisses, par meulage à l'aide d'une meule et sont soudées ou électroplaquées pour former des électrodes finales de la bobine d'induction.

7. Procédé de fabrication d'une bobine d'induction, dans lequel le procédé comprend les étapes suivantes :
(1) enrouler un fil émaillé pour former une bobine à empilage monocouche ou multicouche (4A), dans lequel la bobine (4A) comporte des sorties ;
(2) placer un axe formant noyau en T (2A, 3A) dans un diamètre intérieur de la bobine (4A), de manière qu'une base en forme de feuille (3A) de l'axe formant noyau en T (2A, 3A) soit insérée, par deux côtés de la base (3A), dans les deux sorties de la bobine (4A) pour former une partie centrale interne montée préfabriquée ;
(3) placer la partie centrale interne montée préfabriquée dans un moule correspondant, de manière que des parties de la bobine (4A) qui s'étendent pour former des électrodes (5A, 6A), lesquelles forment lesdites sorties, soient propres à être visibles à l'extérieur d'une couche d'enrobage (1A) ;
(4) remplir le moule de particules de poudre métallique mélangées et former une couche d'enrobage externe (1A) de la bobine d'induction par moulage sous pression avec compression à froid ou une combinaison de compression à froid et de compression à chaud, au moyen d'une presse à mouler mécanique ou hydraulique pour métallurgie des poudres ;
(5) les deux extrémités des électrodes (5A, 6A) formées directement par extension et pliage de la bobine (4A) formant ainsi des parties étendues de la bobine (4A) sont noyées profondément dans la couche d'enrobage externe (1A), de sorte que les deux extrémités des électrodes (5A, 6A) sont enrobées par la couche d'enrobage externe (1A), et des sections médianes visibles des électrodes (5A, 6A) sont nettoyées pour devenir des faces d'extrémité lisses, par meulage à l'aide d'une meule et sont soudées ou électroplaquées pour former des électrodes finales de la bobine d'induction ; et la bobine d'induction est formée.
